# EUROPEAN PATENT APPLICATION

(11) **EP 4 005 381 A1**
(43) Date of publication of application: **01.06.2022**
(21) Application number: 21173281.3
(22) Date of filing: 11.05.2021
(51) Int. Cl.: A01M 29/18, A01M 29/10

(54) **ULTRASONIC DOG REPELLER WITH TWO ULTRASONIC EMITTERS**

(30) Priority: 30.11.2020 CN 202022833265 U
(71) Applicant: Shenzhen DogCare Innovation & Technology Co., Ltd., ShenZhen, Guangdong (CN)
(72) Inventor: CHEN, Qingyong, Shenzhen, Guangdong 518000 (CN); LIU, Zhifeng, Shenzhen, Guangdong 518000 (CN); LIU, Xiaona, Shenzhen, Guangdong 518000 (CN); HUANG, Xin, Shenzhen, Guangdong 518000 (CN)
(74) Representative: De Arpe Tejero, Manuel

(57) **Abstract**

An ultrasonic dog repeller with two ultrasonic emitters comprises a housing (1) formed with a part cavity, a front support (2) clamped in the part cavity, a main board (3) clamped on the front support (2) and provided with a battery (4), and an ultrasonic head clamped on the front support (2), provided with a pair of ultrasonic emitters (5) capable of emitting in-phase ultrasonic sounds, and electrically connected to the main board (3). According to the ultrasonic dog repeller with two ultrasonic emitters, ultrasonic waves emitted by the two ultrasonic emitters (5) are superimposed, so that compared with the prior art, the ultrasonic waves can be transmitted farther by users, and the two ultrasonic emitters (5) are protected from being burnt out.

## Description

### BACKGROUND OF THE INVENTION

### 1. Technical Field

The invention relates to the technical field of pet supplies, in particular to an ultrasonic dog repeller with two ultrasonic emitters.

### 2. Description of Related Art

Ultrasonic dog repellers emit sounds (sound waves over 20KNz) that cannot be heard by human ears, but can be heard by dogs. The ultrasonic dog repellers are used to emit high-decibel ultrasonic waves to deter dogs. Ultrasonic waves and common sound waves are mechanical waves, but the ultrasonic waves are likely to be attenuated when propagated in air due to their high frequency, which makes the effective distance of the ultrasonic dog repellers very short, generally within five meters.

To solve the problem of the short effective distance of the ultrasonic waves, the drive voltage of the ultrasonic waves needs to be increased. But, the increase of the drive voltage of an ultrasonic head may lead to damage to an ultrasonic emitter.

### BRIEF SUMMARY OF THE INVENTION

### (1) Technical issue to be settled

In view of the above-mentioned disadvantages and defects of the prior art, the invention provides an ultrasonic dog repeller with two ultrasonic emitters.

### (2) Technical solution

To fulfill the above objective, the embodiments of the invention provide an ultrasonic dog repeller with two ultrasonic emitters, comprising:
A housing formed with a part cavity;
A front support clamped in the part cavity;
A main board clamped on the front support and provided with a battery; and
an ultrasonic head clamped on the front support, provided with a pair of ultrasonic emitters capable of emitting in-phase ultrasonic sounds, and electrically connected to the main board.

Preferably, a drive circuit is disposed on the main board and has a signal output terminal for driving the pair of ultrasonic emitters to emit ultrasonic waves, and the ultrasonic emitters are connected in parallel to the signal output terminal of the drive circuit.

Preferably, a strobe light is disposed on the ultrasonic head, is located between the pair of ultrasonic emitters, and is electrically connected to the main board.

Preferably, the ultrasonic dog repeller with two ultrasonic emitters further comprises an end shell clamped on the housing, used for sealing the part cavity and formed with a light hole and a pair of ultrasonic holes, wherein the strobe light is disposed in the light hole, and the two ultrasonic emitters are disposed in the two ultrasonic holes, respectively.

Preferably, ultrasonic foam is disposed between the ultrasonic holes and the ultrasonic head.

Preferably, a rear support is disposed on the main board, and the battery is clamped between the rear support and the main board.

Preferably, battery foam is disposed between the rear support and the battery.

Preferably, the housing is provided with a plurality of buttons which penetrate through a battery hole to be connected to the main board.

Preferably, the main board is provided with a charging port, and the housing is provided with a charging hole corresponding to the charging port.

### (3) Beneficial effects

The invention has the following beneficial effects: according to the ultrasonic dog repeller with two ultrasonic emitters, ultrasonic waves emitted by the two ultrasonic emitters are superimposed, so that compared with the prior art, the ultrasonic waves can be transmitted farther by users, and the ultrasonic emitters are protected from being burnt out.

### BRIEF DESCRIPTION OF THE SEVERAL VIEWS OF THE DRAWINGS

FIG. 1 is an exploded view of an ultrasonic dog repeller with two ultrasonic emitters of the invention;
FIG. 2 is a front view of the ultrasonic dog repeller with two ultrasonic emitters of the invention;
FIG. 3 is a top view of the ultrasonic dog repeller with two ultrasonic emitters of the invention;
FIG. 4 is a diagram of a drive circuit of the ultrasonic dog repeller with two ultrasonic emitters of the invention.

### [Reference Signs]

1, housing; 2, front support; 3, main board; 4, battery; 5, ultrasonic emitter; 6, strobe light; 7, end shell; 8, ultrasonic foam; 9, rear support; 10, battery foam; 11, button; 12, charging port.

### DETAILED DESCRIPTION OF THE INVENTION

To gain a better understanding of the aforesaid technical solution, illustrative embodiments of the invention will be described in further detail below with reference to the accompanying drawings. Although the illustrative embodiments of the invention are shown by the accompanying drawings, it should be understood that the invention can be implemented in different forms and should not be limited by the embodiments expounded below. In fact, these embodiments are provided to enable those skilled in the art to understand the invention more clearly and comprehensively and convey the scope of the invention to those skilled in the art completely.

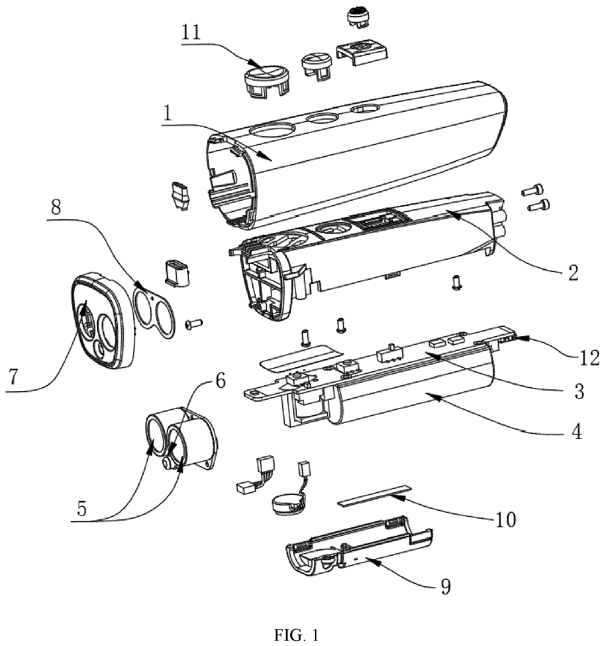

Referring to FIG. 1 to FIG. 3, the embodiments of the invention provide an ultrasonic dog repeller with two ultrasonic emitters 5. The ultrasonic dog repeller comprises a housing 1, a front support 2, a main board 3 and an ultrasonic head, wherein the housing 1 is formed with a part cavity; the front support 2 is clamped in the part cavity; the main board 3 is clamped on the front support 2 and is provided with a battery 4; and the ultrasonic head is clamped on the front support 2, is provided with a pair of ultrasonic emitters 5 capable of emitting in-phase ultrasonic waves, and is electrically connected to the main board 3.

In a preferred embodiment, the two ultrasonic emitters 5 are connected in parallel and are as closer as possible, positive poles of the two ultrasonic emitters 5 are connected, and negative poles of the two ultrasonic emitters 5 are connected. When driven by software, the two ultrasonic emitters 5 are simultaneously driven by the same drive circuit, so that ultrasonic waves emitted by the two ultrasonic emitters 5 are output in phase, and two waveforms are superimposed; and the ultrasonic waves will be transmitted by a farther distance with the increase of the amplitude of the ultrasonic waves. In this way, the voltage of each ultrasonic emitter does not need to be excessively increased, and thus, the ultrasonic emitters are protected being burnt out. Compared with the prior art, the ultrasonic waves emitted by the ultrasonic heads can be transmitted farther, and the ultrasonic emitters 5 are protected from being burnt out.

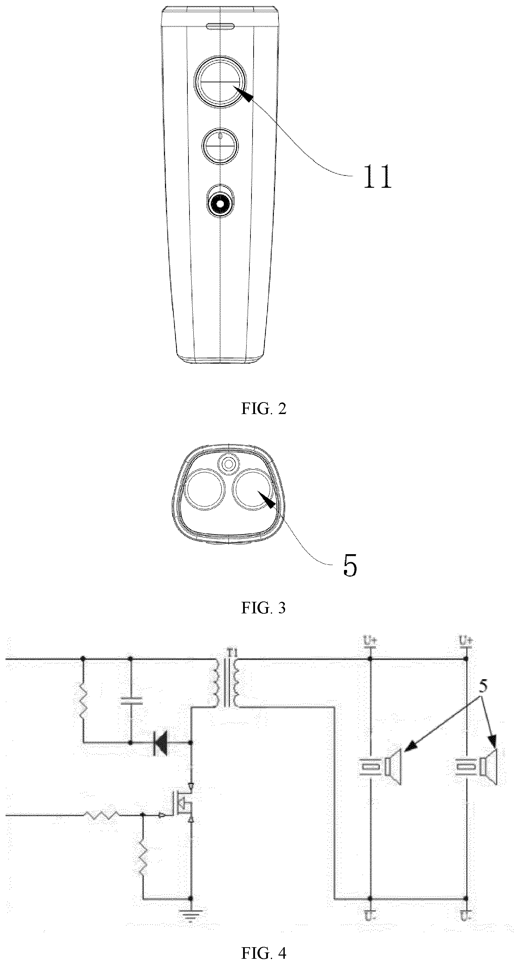

Wherein, referring to FIG. 4, the drive circuit is disposed on the main board 3 and has a signal output terminal for driving the pair of ultrasonic emitters 5 to emit ultrasonic waves, and the ultrasonic emitters 5 are connected in parallel to the signal output terminal of the drive circuit. The two ultrasonic emitters 5 are connected in parallel to the same signal output terminal, so that it is ensured that the ultrasonic waves are output in phase when emitted, and the two waveforms are superimposed; and the transmission distance is increased with the increase of the amplitude of the ultrasonic waves.

Furthermore, a strobe light 6 is disposed on the ultrasonic head, is located between the two ultrasonic emitters 5, and is electrically connected to the main board 3. A better dog repelling effect can be realized through the cooperation of the strobe light 6 and the ultrasonic waves.

Wherein, the ultrasonic dog repeller with two ultrasonic emitters 5 further comprises an end shell 7 clamped on the housing 1 and used for sealing the part cavity, the end shell 7 is formed with a light hole and a pair of ultrasonic holes, the strobe light 6 is disposed in the light hole, and the two ultrasonic emitters 5 are disposed in the two ultrasonic holes, respectively.

Furthermore, ultrasonic foam 8 is disposed between the ultrasonic holes and the ultrasonic head. The ultrasonic head can be protected by the ultrasonic foam 8 and thus will not be damaged by an external force.

Wherein, a rear support 9 is disposed on the main board 3, and the battery 4 is clamped between the rear support 9 and the main board 3. Furthermore, battery foam 10 is disposed between the rear support 9 and the battery 4. The battery 4 can be protected by the battery foam 10 and thus will not be damaged by an external force.

Wherein, referring to FIG. 3, a plurality of buttons 11 are disposed on the housing 1 and penetrate through a battery 4 hole to be connected to the main board 3. The output mode of the two ultrasonic emitters can be adjusted by means of the plurality of buttons 11, so that users can switch the output mode easily.

Furthermore, the main board 3 is provided with a charging port 12, the housing 1 is provided with a charging hole corresponding to the charging port 12. The charging port 12 may be a common micro charging port to be easily used by users for charging.

It should be noted that, in the description of the invention, the terms "first" and "second" are merely used for the purpose of description, and do not indicate or imply relative importance or the number of technical features referred to. Thus, a feature defined by "first" or "second" may explicitly or implicitly indicate the inclusion of one or more said feature. Unless otherwise explicitly specified, in the description of the invention, "a plurality of' refers to two or more.

Unless otherwise explicitly stated and specified, terms such as "mount", "connect", "connection" and "fix" in the invention should be understood broadly. For example, "connection" may refer to fixed connection, detachable connection, or integrated connection, or mechanical connection or electrical connection, or direct connection or indirect connection via an intermediate medium, or internal communication or interaction of two elements. For those ordinarily skilled in the art, the specific meanings of these terms in the invention can be understood as the case may be.

In the invention, unless otherwise explicitly stated and specified, if a first feature is located "over" or "under" a second feature, the first feature is in direct contact with the second feature or the first feature is in indirect contact with the second feature via an intermediate medium. In addition, if a first feature is located "above" a second feature, the second feature is located above the second feature exactly or obliquely, or it only indicates that the horizontal altitude of the first feature is greater than that of the second feature. If a first feature is located "below" a second feature, the first feature is located below the second feature exactly or obliquely, or it only indicates that the horizontal altitude of the first feature is smaller than that of the second feature.

The term "one embodiment", "some embodiments", "embodiment", "example", "specific example" or "some examples" in the description refers to that the specific features, structures, materials or characteristics described in said embodiment or example are included in at least one embodiment or example of the invention. In this specification, the illustrative description of these terms is not necessarily limited to the same embodiment or example. Moreover, the specific features, structures, materials or characteristics can be combined properly in any one or more embodiments or examples. In addition, those skilled in the art can integrate and combine different embodiments or examples described in this specification or the features described in different embodiments or examples.

Although the embodiments of the invention have been illustrated and described above, these embodiments are merely illustrative and should not be construed as limitations of the invention. Those ordinarily skilled in the art can make modifications, amendments, substitutions and transformations to these embodiments within the scope of the invention.

## Claims

1. An ultrasonic dog repeller with two ultrasonic emitters, comprising:
a housing (1) formed with a part cavity;
a front support (2) clamped in the part cavity;
a main board (3) clamped on the front support (2) and provided with a battery (4); and
an ultrasonic head clamped on the front support (2), provided with a pair of ultrasonic emitters (5) capable of emitting in-phase ultrasonic sounds, and electrically connected to the main board (3).

2. The ultrasonic dog repeller with two ultrasonic emitters according to claim 1, wherein a drive circuit is disposed on the main board (3) and has a signal output terminal for driving the pair of ultrasonic emitters (5) to emit ultrasonic waves, and the ultrasonic emitters (5) are connected in parallel to the signal output terminal of the drive circuit.

3. The ultrasonic dog repeller with two ultrasonic emitters according to claim 2, wherein a strobe light (6) is disposed on the ultrasonic head, is located between the pair of ultrasonic emitters (5), and is electrically connected to the main board (3).

4. The ultrasonic dog repeller with two ultrasonic emitters according to claim 3, further comprising an end shell (7) clamped on the housing (1), used for sealing the part cavity and formed with a light hole and a pair of ultrasonic holes, wherein the strobe light (6) is disposed in the light hole, and the two ultrasonic emitters (5) are disposed in the two ultrasonic holes, respectively.

5. The ultrasonic dog repeller with two ultrasonic emitters according to claim 4, wherein ultrasonic foam (8) is disposed between the ultrasonic holes and the ultrasonic head.

6. The ultrasonic dog repeller with two ultrasonic emitters according to claim 1, wherein a rear support (9) is disposed on the main board (3), and the battery (4) is clamped between the rear support (9) and the main board (3).

7. The ultrasonic dog repeller with two ultrasonic emitters according to claim 6, wherein battery foam (10) is disposed between the rear support (9) and the battery (4).

8. The ultrasonic dog repeller with two ultrasonic emitters according to claim 1, wherein the housing (1) is provided with a plurality of buttons (11) which penetrate through a battery hole to be connected to the main board (3).

9. The ultrasonic dog repeller with two ultrasonic emitters according to claim 1, wherein the main board (3) is provided with a charging port (12), and the housing (1) is provided with a charging hole corresponding to the charging port (12).
